# EUROPÄISCHE PATENTSCHRIFT

(11) **EP 1 213 509 B1**
(45) Veröffentlichungstag und Bekanntmachung des Hinweises auf die Patenterteilung: **16.07.2008**
(21) Anmeldenummer: 01128586.3
(22) Anmeldetag: 30.11.2001
(51) Int. Cl.: F16H 59/04

(54) **Schaltvorrichtung für ein Fahrzeuggetriebe**
Shifting device for a vehicle transmission
Mécanisme de changement de vitesses pour transmission de véhicule

(30) Priorität: 07.12.2000 DE 10060803
(43) Veröffentlichungstag der Anmeldung: 12.06.2002
(73) Patentinhaber: DEERE & COMPANY, Moline, Illinois 61265-8098 (US)
(72) Erfinder: Rückert, Dieter, 68799 Reilingen (DE); Höfle, Jörg, 64342 Jugenheim (DE)
(74) Vertreter: Magin, Ludwig Bernhard

(56) Entgegenhaltungen:
- EP-A- 0 525 689
- DE-A1- 19 922 010
- GB-A- 1 402 662
- US-A- 4 050 325
- US-A- 4 132 124
- US-A- 4 781 074
- US-A- 5 022 281

## Beschreibung

Die Erfindung betrifft eine Schaltvorrichtung für ein Fahrzeuggetriebe mit einem von Hand bedienbaren, in einer Längsrichtung und in einer Querrichtung bewegbaren Schalthebel, der auf Übertragungselementen einwirkt, um der Hebelbewegung entsprechende Informationen an das Fahrzeuggetriebe oder eine Getriebesteuerung zu übermitteln. Mit dem Schalthebel können beispielsweise unterschiedliche Gänge oder Gruppen des Fahrzeuggetriebes ausgewählt oder eingestellt werden. Der Schalthebel kann auch der Einstellung von Neutralpositionen und einer Parkposition dienen.

Insbesondere bei landwirtschaftlichen Traktoren sind Schalteinrichtungen weit verbreitet, bei denen ein von Hand bedienbarer Schalthebel vorgesehen ist. Der Schalthebel lässt sich in zwei Richtungen um zwei senkrecht zueinander ausgerichtete Achsen verschwenken. Seine Schaltwege sind durch eine Schaltkulisse festgelegt. Die Schaltkulisse kann beispielsweise die Form eines einfachen oder eines doppelten H aufweisen, die eine mittlere Neutralgasse und zwei oder drei Quergassen hat. Durch Bewegen des Schalthebels in einen Endbereich einer der Quergasse, lässt sich ein Gang oder eine Gruppe des Getriebes auswählen und einstellen.

Aus der GB 1 402 662 ist eine Schaltvorrichtung mit den Merkmalen des Oberbegriffs des Anspruchs 1 bekannt.

Wie beispielsweise aus der DE-A-199 22 010 hervorgeht, ist an einem Schalthebel ein Führungsstein befestigt, welcher mit Quadranten zweier Übertragungselemente zusammenwirkt. Durch Verschwenken des Schalthebels in Längsrichtung lässt sich der Führungsstein von einem Quadrant zum anderen Quadrant bewegen, um einen der Quadranten auszuwählen. Durch Verschwenken des Schalthebels in Querrichtung greift der Führungsstein an dem ausgewählten Quadranten an und verschiebt das zugehörige mit dem Fahrzeuggetriebe in Verbindung stehende Übertragungselement, wodurch ein Gang oder eine Gruppe des Fahrzeuggetriebes eingestellt wird.

Die der Erfindung zugrunde liegende Aufgabe wird darin gesehen, eine ergonomisch vorteilhafte Schaltvorrichtung anzugeben, die sich durch eine kompakte Bauweise auszeichnet.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Prinzipiell können für beide Bewegungsrichtungen nach Art eines Gelenkvierecks angeordnete Lenker verwendet werden. Beispielsweise werden dabei wenigstens ein erstes Lenkerpaar für eine erste Bewegungsrichtung zwischen der Hebelhalterung und einer Zwischenkonsole und wenigstens ein zweites Lenkerpaar für eine zweite Bewegungsrichtung zwischen der Zwischenkonsole (die hier die Funktion der Hebelhalterung übernimmt) und einer fahrzeugfesten Endkonsole angeordnet. Im allgemeinen genügt jedoch eine Lenkeranordnung für die Längsbewegung, bei der der Schalthebel in einer Neutralgasse bewegt wird.

Die erfindungsgemäße Anordnung hat zur Folge, dass der Schalthebel nicht an einer Drehachse angelenkt ist und um diese Achse verschwenkt wird. Vielmehr ergibt sich durch die Lenkeranordnung eine virtuelle Schwenkachse (Momentanpol), die grundsätzlich zwischen minus Unendlich und plus Unendlich liegen kann. Ist bei gleich langen Lenkern der Abstand zwischen den halterungsseitigen Anlenkachsen der beiden Lenker gleich dem Abstand zwischen den konsolenseitigen Anlenkachsen der beiden Lenker, so liegt der Momentanpol im Unendlichen, was eine Parallelführung des Schalthebels zur Folge hat. Mit zunehmendem Unterschied zwischen den beiden Anlenkachsenabständen wandert der Momentanpol aus dem Unendlichen in die Nähe des Schalthebels. Auf welcher Hebelachsenseite die virtuelle Schwenkachse liegt, hängt davon ab, ob der halterungsseitige Abstand größer oder kleiner als der konsolenseitige Abstand ist. Dementsprechend kippt der Schalthebel bei einer Betätigung nach innen oder nach außen.

Die erfindungsgemäße Schaltvorrichtung ermöglicht durch die Einstellung einer gewünschten virtuellen Schwenkachse des Schalthebels eine im wesentlichen parallele Hebelbewegung, bei welcher der Handgriff des Schalthebels nicht oder nicht wesentlich verkippt wird, sondern mit dem Schalthebel seine räumliche Ausrichtung im wesentlichen beibehält. Trotz relativ geringer Hebellänge und relativ geringen Längsbewegungen des Schalthebels ergeben sich vergleichsweise große Betätigungswege im Bereich der Übertragungselemente, z. B. der Schaltstücke. Die Schaltvorrichtung kann somit relativ klein und kompakt ausgelegt werden. Die erfinderische Schaltvorrichtung führt zu einer erheblichen Verbesserung der Ergonomie. Die kompakte Ausbildung und die Reduktion des lateralen Betätigungsweges des Schalthebels lässt eine günstige Positionierung im Bereich des Fahrzeugstandes zu. Die Betätigungswege sind kurz und es wird ein unbequemes Verkippen der Hand beim Schalten vermieden, wie es bei einem gemäß dem Stand der Technik ausgebildeten Schalthebel auftreten kann.

Vorzugsweise ist jeweils ein Ende eines Lenkers in Längsrichtung verschwenkbar an der Halterung und das andere Ende des Lenkers in Längsrichtung verschwenkbar an der Konsole angelenkt. Die Anlenkachsen sind dabei parallel zueinander ausgerichtet.
Um die Herstellungskosten gering zu halten, sind gemäß einer bevorzugten Ausbildung der Erfindung alle Lenker der Schaltvorrichtung gleich ausgebildet. Sie sind vorzugsweise gleich lang, auch wenn für besondere Anwendungsfälle auch unterschiedliche Längen geeignet sein können.

Wie erwähnt wurde, können die Lenker parallel zueinander ausgerichtet sein (Parallelschwinge), so dass der Schalthebel reine translatorische Bewegungen ausführt. Es hat sich jedoch herausgestellt, das eine besonders günstige ergonomisch Ausbildung dadurch gegeben ist, dass der Abstand zwischen den halterungsseitigen Anlenkachsen der Lenker größer ist als der Abstand zwischen den konsolenseitigen Anlenkachsen der Lenker. Die Lenker sind somit leicht gegeneinander geneigt. Der Schnittpunkt der Lenker (Momentanzentrum) liegt im Endlichen ist jedoch relativ weit vom Ort des Schalthebels entfernt. Bei einer Hebelbewegung verschwenkt sich der Hebelgriff nur gering, was sich für eine gute Ergonomie als vorteilhaft herausgestellt hat.

Eine bevorzugte Ausgestaltung der Erfindung sieht vor, dass der Schalthebel im mittleren Bereich einer als Brücke ausgebildeten Halterung befestigt ist und dass auf beiden Seiten der Brücke je ein Lenkerpaar angreift. Dies ermöglicht eine weitgehend symmetrische Ausbildung der Schaltvorrichtung mit einer optimalen Kräfteverteilung, so dass sich die Schaltvorrichtung relativ klein und kompakt ausbilden lässt. Des weiteren kann an jeder Seite der Brücke ein Druckstück befestigt sein, dass mit zwischen den Druckstücken angeordneten Kontaktstücken der Übertragungselemente zusammenwirkt.

Des weiteren ist es von Vorteil, mehrere um eine gehäusefeste Schwenkachse verschwenkbare Übertragungshebel vorzusehen, die jeweils entsprechende Informationen an das Fahrzeuggetriebe übermitteln. Die Übertragungshebel weisen jeweils wenigstens ein Kontaktstück mit jeweils wenigstens einer Kontaktfläche auf. Der Schalthebel oder die Halterung trägt wenigstens ein Druckstück. Durch Längsbewegen des Schalthebels lässt sich einer der Übertragungshebel auswählen, indem das Druckstück in eine Lage gebracht wird, in der es einer Kontaktfläche des ausgewählten Übertragungshebels gegenübersteht. Bei einer Querbewegung des Schalthebels drückt das Druckstück auf die gegenüberstehende Kontaktfläche und verschwenkt den ausgewählten Übertragungshebel aus seiner Neutralstellung z. B. in eine Gangposition.

Vorzugsweise sind mehrere Übertragungshebel zwischen zwei Strukturplatten angeordnet. Es ist für eine kompakte Ausbildung der Schaltvorrichtung auch zweckmäßig, wenn die Schwenkachse der Übertragungshebel mit der Querachse der Strukturplatten zusammenfällt.

Zur Unterstützung der bereits erwähnten Vorzüge einer kompakten Bauweise, ist es von Vorteil das Kontaktstück mit zwei gegenüberliegenden Kontaktflächen auszubilden, die je mit einem zugehörigen Druckstück zusammenwirken.

Vorzugsweise weisen die Übertragungshebel Schenkel auf, die sich mit einer Einrichtung zur Umschaltung des Fahrzeuggetriebes in Verbindung bringen lassen. Beispielsweise können in Ausnehmung eines Schenkels Schaltzüge eingehängt werden. Es ist alternativ oder ergänzend hierzu auch möglich, im Bereich der Schenkel Sensoren, z. B. elektrische Schalter, anzuordnen, die bei einem Verschwenken des Übertragungshebels ansprechen und Umschaltsignale an eine Getriebesteuerung abgeben.

Es ist zweckmäßig zwischen jeweils zwei benachbarten Übertragungshebeln wenigstens je ein Abstandselement anzuordnen, der nicht mit den Übertragungshebeln verschwenkt wird, sondern an einem Gehäuse, beispielsweise einem Gehäuse der Schaltvorrichtung, befestigt ist. In die Abstandselemente können beispielsweise elektrische Schalter integriert sein, welche die Stellung der Übertragungshebel erfassen und an eine elektrische Steuerung melden.

Von besonderem Vorteil ist es, die Schaltvorrichtung mit dem Schalthebel, der Halterung, der Konsole und den Übertragungselementen in einer vormontierbaren Baueinheit zusammenzufassen. Dieser Schalthebelzusammenbau lässt sich als ein in das Arbeitsfahrzeug integriertes vollständig vormontiertes, einbaufertiges Bauteil ausbilden. Sie kann wartungsfrei ausgebildet sein und lässt sich leicht mit handelsüblichen Werkzeugen montieren und demontieren.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

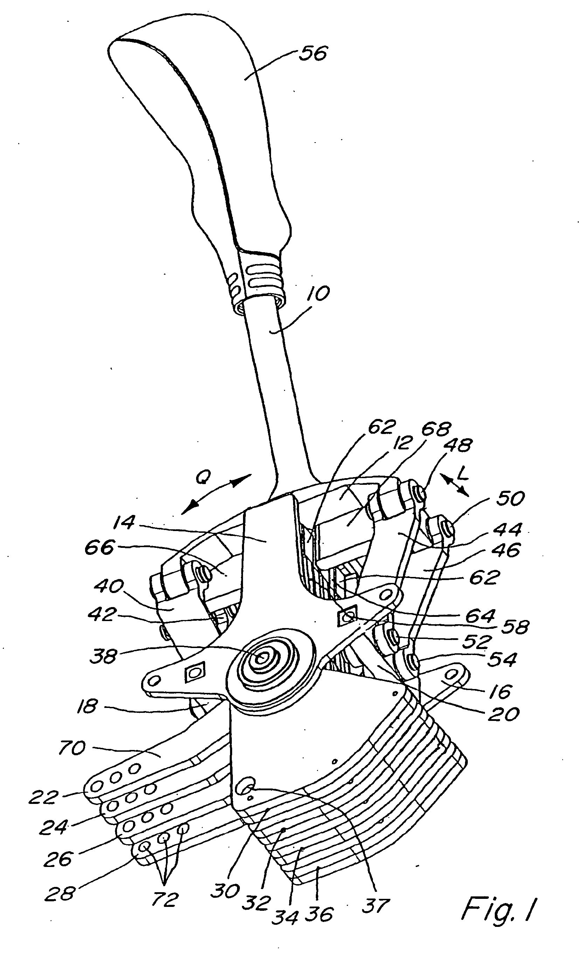

- Fig. 1: die perspektivische Darstellung einer erfindungsgemäßen Schaltvorrichtung,
- Fig. 2: die Schaltvorrichtung gemäß Fig. 1 in Querrichtung,
- Fig. 3: die Schaltvorrichtung gemäß Fig. 1 in Längsrichtung und
- Fig. 4: das Schema einer Schaltkulisse.

Die in den Figuren dargestellte Schaltkulisse enthält einen Schalthebel 10, der im mittleren Bereich einer als Brücke 12 ausgebildeten Halterung befestigt ist, sowie eine Konsole, die im wesentlichen zwei seitlich angeordnete, zueinander beabstandete Strukturplatten 14, 16 aufweist, welche durch zwei stabförmige als Verbindungselemente dienende Abstandhalter 18, 20 miteinander verbunden sind. Zwischen den beiden Strukturplatten 14, 16 sind vier Übertragungshebel 22, 24, 26, 28 und vier gehäusefeste Abstandsbleche 30, 32, 34, 36 angeordnet, die alternativ geschichtet sind. Die Abstandsbleche 30, 32, 34, 36 weisen miteinander fluchtende Längsbohrungen 37 auf, durch die sich ein nicht gezeigter Bolzen stecken lässt, um die Abstandsbleche 30, 32, 34, 36 an einem nicht gezeigten Gehäuse zu befestigen. Die Strukturplatten 14, 16 und die Übertragungshebel 22, 24, 26, 28 sind auf einer gehäusefesten Querachse 38 schwenkbar gelagert.

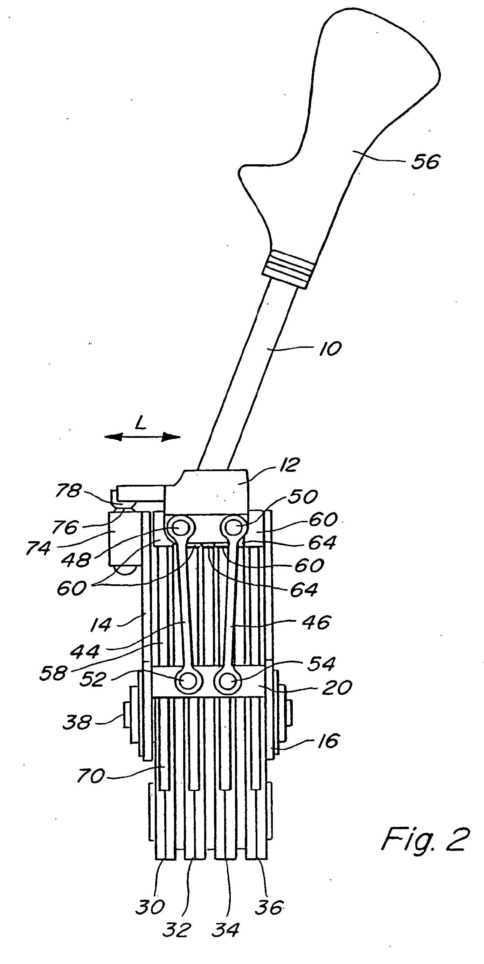

An den beiden bezüglich der Querrichtung Q liegenden Enden der Brücke 12 sind je zwei Lenker 40, 42, 44, 46 angelenkt, deren jeweils andere Enden an dem zugehörigen Abstandshalter 18, 20 der Konsole schwenkbar gelagert sind. Alle Anlenkachsen 48, 50, 52, 54 der Lenker 40, 42, 44, 46 verlaufen in Querrichtung Q und parallel zueinander. Jeweils zwei Lenker 40, 42; 44, 46 bilden gemeinsam mit der Brücke 12 und dem jeweiligen Abstandhalter 18, 20 ein Gelenkviereck. Wie aus Fig. 2 deutlich hervorgeht, verlaufen die beiden Lenker 44, 46 nicht parallel zueinander. Vielmehr ist der Abstand zwischen den brückenseitigen Anlenkachsen 48, 50 größer als der Abstand zwischen den abstandhalterseitigen Anlenkachsen 52, 54. Die Längsachsen der beiden Lenker 44, 46 kreuzen sich in einem nicht dargestellten virtuellen Momentanpol, der bezüglich der Fig. 2 weit unten und außerhalb des Papierrandes liegt. Der Momentanpol der Lenkeranordnung liegt damit weit unterhalb der Querachse 38 der Schaltvorrichtung. Bei einer Bewegung des Schalthebels 10 in Längsrichtung L wird dieser um den Momentanpol geschwenkt, weil der Momentanpol sehr weit weg liegt, findet bei der Längsbewegung lediglich eine geringe Verkippung des Schalthebels 10 statt, so dass der Griff 56 des Schalthebels 10 seine räumliche Ausrichtung nahezu beibehält.

Die Übertragungshebel 22, 24, 26, 28 sind alle gleich und enthalten je zwei Schenkel. Ein erster Schenkel 58 erstreckt sich ausgehend von der Querachse 38 in Richtung Schalthebel 10. Der erste Schenkel 58 jedes Übertragungshebels 22, 24, 26, 28 enthält in seinem Endbereich ein Kontaktstück 60, auch Schaltstein genannt, das zwei zueinander gegenüberliegende Kontaktflächen 62 aufweist. Zwischen jeweils zwei benachbarten Kontaktstücken 60 befindet sich ein mit einem Abstandsblech 30, 32, 34, 36 verbundenes feststehendes Abstandstück 64. An den beiden Enden der Brücke 12 ist jeweils ein in Querrichtung Q ausgerichtetes Druckstück 66, 68 befestigt. Die Enden der Druckstücke 66, 68 sind auf die Kontaktflächen 62 ausgerichtet. Durch Verschwenken des Schalthebels 10 in Längsrichtung L um den Momentanpol lässt sich ein Kontaktstück 60 derart auswählen, das die Enden der beiden Druckstücke 66, 68 den Kontaktflächen 62 des ausgewählten Kontaktstücks 60 gegenüberstehen. Wird nun der Schalthebel 10 gemeinsam mit der Konsole in Querrichtung Q um die Querachse 38 verschwenkt, drückt eines der Druckstücke 66, 68 gegen die entsprechende Kontaktfläche 62 und verschwenkt das zugehörige Übertagungselement 22, 24, 26, 28.

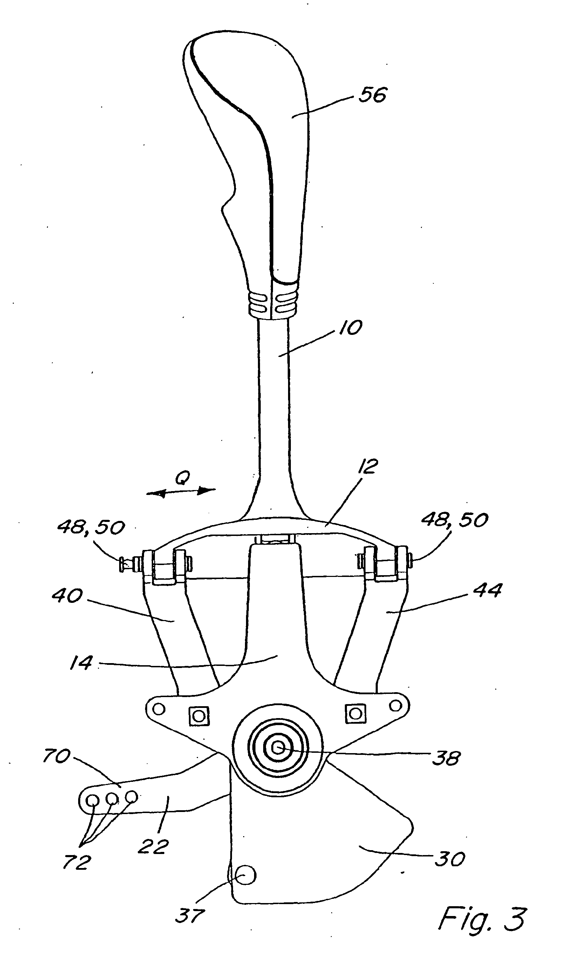

Die zweiten Schenkel 70 der Übertragungshebel 22, 24, 26, 28 sind gegenüber den ersten Schenkeln 58 abgewinkelt und stehen seitlich von der Querachse 38 ab (Fig. 3). Jeder dieser zweiten Schenkel 70 enthält drei Querbohrungen 72. In diese Bohrungen 72 lassen sich wahlweise nicht dargestellte Züge, beispielsweise Druck-Zug-Kabel, einhängen, die mit einer nicht dargestellten Schalteinrichtung eines Fahrzeuggetriebes in Verbindung stehen. Da jeder zweite Schenkel 70 fest mit einem zugehörigen ersten Schenkel 58 verbunden ist, folgt er dessen Bewegungen. Bei einer Querauslenkung des Schalthebels 10 wird der ausgewählte erste Schenkel 58 verschwenkt und damit die Lage des zugehörigen zweiten Schenkels 70 verschoben, so dass das in den zweiten Schenkel 70 eingehängte Druck-Zug-Kabel die Schenkelbewegung auf die Schalteinrichtung des Fahrzeuggetriebes überträgt, um einen Gang oder eine Gruppe einzulegen.

Aus Fig. 2 geht eine an einer Strukturplatte 14 befestigte Rasteinrichtung 74 hervor. Diese enthält eine Kugel 76, die durch eine nicht sichtbare Feder gegen ein an der Brücke 12 befestigtes Rastprofil 78 gedrückt wird. Das Rastprofil 78 definiert Raststellungen des Schalthebels 10, bei denen die Druckstücke 66, 68 einer ausgewählten Kontaktfläche 62 gegenüberstehen.

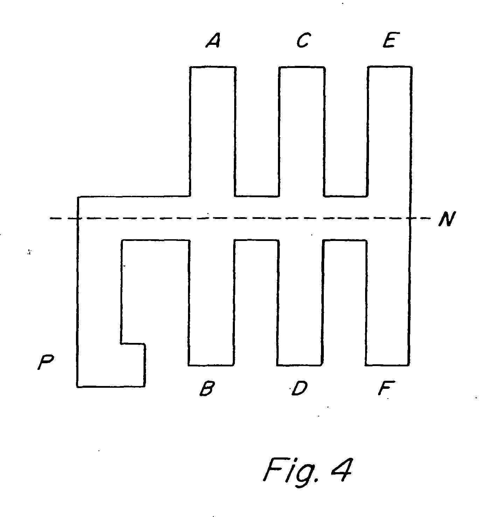

Die in Fig. 4 dargestellte Schaltkulisse enthält eine in Längsrichtung verlaufende Neutralgasse N von der drei Quergassen abzweigen, deren Endpunkte jeweils einer Gruppe A, B, C, D, E, F des Fahrzeuggetriebes entsprechen. Des weiteren zweigt im Endbereich der Neutralgasse N von dieser eine hakenförmig ausgebildete Quergasse ab, die einer Parkposition P des Fahrzeuggetriebes entspricht. Die Schaltkulisse ist im Schaftbereich des Schalthebels 10 angeordnet und lässt nur eine Bewegung des Schalthebels 10 innerhalb der Neutralgasse und der Quergassen zu.

## Patentansprüche

1. Schaltvorrichtung für ein Fahrzeuggetriebe mit einem von Hand bedienbaren, in einer Längsrichtung (L) und in einer Querrichtung (Q) bewegbaren Schalthebel (10), der auf Übertragungselemente (22, 24, 26, 28) einwirkt, um der Hebelbewegung entsprechende Informationen an das Fahrzeuggetriebe oder eine Getriebesteuerung zu übermitteln, wobei der Schalthebel (10) an einer Halterung (12) befestigt ist, und wobei wenigstens zwei Lenker (40, 42; 44, 46) vorgesehen sind, welche die Halterung (12) nach Art eines Gelenkvierecks mit einer Konsole (16) verbinden, **dadurch gekennzeichnet, dass** die Konsole wenigstens zwei um eine gemeinsame gehäusefeste Querachse (38) verschwenkbare Strukturplatten (14, 16) enthält, die durch wenigstens ein Verbindungselement (18, 20) miteinander verbunden sind, und dass das Verbindungselement (18, 20) als Halterung ausgebildet ist, an der jeweils ein Ende zweier Lenker (40, 42; 44, 46) angelenkt sind.

2. Schaltvorrichtung nach Anspruch 1, **dadurch gekennzeichnet, dass** jeweils ein Ende eines Lenkers (40, 42, 44, 46) in Längsrichtung (L) verschwenkbar an der Halterung (12) und das andere Ende des Lenkers (40, 42, 44, 48) in Längsrichtung (L) verschwenkbar an der Konsole (16) angelenkt ist und dass die Anlenkachsen (48, 50, 52, 54) parallel zueinander ausgerichtet sind.

3. Schaltvorrichtung nach Anspruch 1 oder 2, **dadurch gekennzeichnet, dass** alle Lenker (40, 42, 44, 46) gleich lang sind.

4. Schaltvorrichtung nach einem der Ansprüche 1 bis 3, **dadurch gekennzeichnet, dass** der Abstand zwischen den halterungsseitigen Anlenkachsen (48, 50) der Lenker (40, 42, 44, 46) größer ist als der Abstand zwischen den konsolenseitigen Anlenkachsen (52, 54) der Lenker (40, 42, 44, 46).

5. Schaltvorrichtung nach einem der Ansprüche 1 bis 4, **dadurch gekennzeichnet, dass** der Schalthebel (10) im mittleren Bereich einer als Brücke (12) ausgebildeten Halterung befestigt ist und dass auf beiden Seiten der Brücke (12) je ein Lenkerpaar (40, 42; 44, 46) angreift.

6. Schaltvorrichtung nach Anspruch 5, **dadurch gekennzeichnet, dass** die beiden Lenkerpaare (40, 42; 44, 46) hinsichtlich des Hebelbefestigungspunktes symmetrisch angeordnet sind und dass die sich entsprechenden Anlenkachsen (48, 50, 52, 54) der beiden Lenkerpaare (40, 42; 44, 46) miteinander fluchten.

7. Schaltvorrichtung nach Anspruch 1, **dadurch gekennzeichnet, dass** mehrere um eine gehäusefeste Schwenkachse (38) verschwenkbare Übertragungshebel (22, 24, 26, 28) vorgesehen sind, die jeweils wenigstens ein Kontaktstück (60) mit jeweils wenigstens einer Kontaktfläche (62) aufweisen, dass der Schalthebel (10) oder die Halterung (12) wenigstens ein Druckstück (66, 68) trägt, welches wenigstens einer Kontaktfläche (62) eines durch Längsbewegen des Schalthebels (10) auswählbaren Übertragungshebels (22, 24, 26, 28) gegenübersteht und bei einer Querbewegung des Schalthebels (10) auf die Kontaktfläche (62) drückt, um den ausgewählten Übertragungshebel (22, 24, 26, 28) zu verschwenken.

8. Schaltvorrichtung nach Anspruch 7, **dadurch gekennzeichnet, dass** mehrere Übertragungshebel (22, 24, 26, 28) zwischen zwei Strukturplatten (30, 32, 34, 36) angeordnet sind und dass die Schwenkachse der Übertragungshebel (22, 24, 26, 28) mit der Querachse (38) der Strukturplatten (14, 16) zusammenfällt.

9. Schaltvorrichtung nach Anspruch 7 oder 8, **dadurch gekennzeichnet, dass** das Kontaktstück (60) zwei gegenüberliegende Kontaktflächen (62) hat, die je mit einem zugehörigen Druckstück (66, 68) zusammenwirken.

10. Schaltvorrichtung nach einem der Ansprüche 7 bis 9, **dadurch gekennzeichnet, dass** der Übertragungshebel (22, 24, 26, 28) einen zweiten Schenkel (70) aufweist, der sich mit einer Einrichtung zur Umschaltung des Fahrzeuggetriebes in Verbindung bringen lässt.

11. Schaltvorrichtung nach einem der Ansprüche 1 bis 10, **dadurch gekennzeichnet, dass** zwischen jeweils zwei benachbarten Übertragungshebeln (22, 24, 26, 28) wenigstens je ein gehäusefestes Abstandselement (30, 32, 34, 36) angeordnet ist.

12. Schaltvorrichtung nach einem der Ansprüche 1 bis 11, **dadurch gekennzeichnet, dass** die Schaltvorrichtung mit dem Schalthebel (10), der Halterung (12), der Konsole (14, 16, 18, 20) und den Übertragungselementen (22, 24, 26, 28) in einer vormontierbaren Baueinheit zusammengefasst sind.

## Claims

1. Shift device for a vehicle transmission having a manually operable shift lever (10) which is movable in a longitudinal direction (L) and in a transverse direction (Q) and which acts on transmission elements (22, 24, 26, 28) in order to transmit items of information corresponding to the lever movement to the vehicle transmission or to a transmission controller, with the shift lever (10) being fastened to a retainer (12), and with at least two links (40, 42; 44, 46) being provided which connect the retainer (12) in the manner of a four-bar chain to a bracket (16), **characterized in that** the bracket contains at least two structured plates (14, 16) which are pivotable about a common transverse axle (38), which is fixed to a housing, and which are connected to one another by means of at least one connecting element (18, 20), and **in that** the connecting element (18, 20) is embodied as a retainer to which are articulatedly connected in each case one end of two links (40, 42; 44, 46).

2. Shift device according to Claim 1, **characterized in that** in each case one end of a link (40, 42, 44, 46) is articulatedly connected to the retainer (12) so as to be pivotable in the longitudinal direction (L) and the other end of the link (40, 42, 44, 46) is articulatedly connected to the bracket (16) so as to be pivotable in the longitudinal direction, and **in that** the articulation axles (48, 50, 52, 54) are aligned parallel to one another.

3. Shift device according to Claim 1 or 2, **characterized in that** all of the links (40, 42, 44, 46) are of equal length.

4. Shift device according to one of Claims 1 to 3, **characterized in that** the spacing between the retainer-side articulation axles (48, 50) of the links (40, 42, 44, 46) is greater than the spacing between the bracket-side articulation axles (52, 54) of the links (40, 42, 44, 46).

5. Shift device according to one of Claims 1 to 4, **characterized in that** the shift lever (10) is fastened in the central region of a retainer which is formed as a bridge (12) and **in that** in each case one link pair (40, 42; 44, 46) engages on both sides of the bridge (12).

6. Shift device according to Claim 5, **characterized in that** the two link pairs (40, 42; 44, 46) are arranged symmetrically with respect to the lever fastening point and **in that** the corresponding articulation axles (48, 50, 52, 54) of the two link pairs (40, 42; 44, 46) are aligned with one another.

7. Shift device according to Claim 1, **characterized in that** a plurality of transmission levers (22, 24, 26, 28), which are pivotable about a pivot axle (38) which is fixed to the housing, are provided, which transmission levers (22, 24, 26, 28) have in each case at least one contact piece (60) with in each case at least one contact face (62), and **in that** the shift lever (10) or the retainer (12) supports at least one thrust piece (66, 68) which is situated opposite at least one contact face (62) of a transmission lever (22, 24, 26, 28) which can be selected by longitudinally moving the shift lever (10) and which, in the event of a transverse movement of the shift lever (10), presses against the contact face (62) in order to pivot the selected transmission lever (22, 24, 26, 28).

8. Shift device according to Claim 7, **characterized in that** a plurality of transmission levers (22, 24, 26, 28) are arranged between two structured plates (30, 32, 34, 36) and **in that** the pivot axle of the transmission levers (22, 24, 26, 28) coincides with the transverse axle (38) of the structured plates (14, 16).

9. Shift device according to Claim 7 or 8, **characterized in that** the contact piece (60) has two opposite contact faces (62) which in each case interact with an associated thrust piece (66, 68).

10. Shift device according to one of Claims 7 to 9, **characterized in that** the transmission lever (22, 24, 26, 28) has a second limb (70) which can be connected to a device for shifting the vehicle transmission.

11. Shift device according to one of Claims 1 to 10, **characterized in that** at least in each case one spacer element (30, 32, 34, 36) which is fixed to the housing is arranged between in each case two adjacent transmission levers (22, 24, 26, 28).

12. Shift device according to one of Claims 1 to 11, **characterized in that** the shift device with the shift lever (10), the retainer (12), the bracket (14, 16, 18, 20) and the transmission elements (22, 24, 26, 28) are combined in a pre-assemblable modular unit.

## Revendications

1. Dispositif de changement de vitesse pour une boîte de vitesses d'un véhicule, comportant un levier de changement de vitesse (10) à commander à la main, qui est mobile dans une direction longitudinale (L) et dans une direction transversale (Q) et qui agit sur des éléments de transmission (22, 24, 26, 28), afin de transmettre à la boîte de vitesses ou à une commande de boîte de vitesses des informations correspondant au mouvement du levier, le levier de changement de vitesse (10) étant fixé sur un support (12), et au moins deux bras oscillants (40, 42 ; 44, 46) étant prévus pour relier le support (12) avec une console (16) à la manière d'un rectangle articulé, **caractérisé en ce que** la console comporte au moins deux plaques structurelles (14, 16), qui peuvent pivoter autour d'un axe transversal (38) commun solidaire du carter et qui peuvent être reliées entre elles par au moins un élément de liaison (18, 20), et **en ce que** l'élément de liaison (18, 20) est réalisé sous forme de support, contre lequel est articulée respectivement une extrémité de deux bras oscillants (40, 42 ; 44, 46).

2. Dispositif de changement de vitesse selon la revendication 1, **caractérisé en ce que** respectivement une extrémité d'un bras oscillant (40, 42, 44, 46) est articulée contre le support (12) de manière à pouvoir pivoter dans la direction longitudinale (L) et l'autre extrémité du bras oscillant (40, 42, 44, 46) est articulée contre la console (16) de manière à pouvoir pivoter dans la direction longitudinale (L), et **en ce que** les axes d'articulation (48, 50, 52, 54) sont orientés parallèlement entre eux.

3. Dispositif de changement de vitesse selon la revendication 1 ou 2, **caractérisé en ce que** tous les bras oscillants (40, 42, 44, 46) ont la même longueur.

4. Dispositif de changement de vitesse selon l'une quelconque des revendications 1 à 3, **caractérisé en ce que** la distance entre les axes d'articulation (48, 50), du côté support, des bras oscillants (40, 42, 44, 46) est supérieure à la distance entre les axes d'articulation (52, 54), du côté console, des bras oscillants (40, 42, 44, 46).

5. Dispositif de changement de vitesse selon l'une quelconque des revendications 1 à 4, **caractérisé en ce que** le levier de changement de vitesse (10) est fixé dans la zone centrale d'un support réalisé sous forme de pont (12), et **en ce que** respectivement une paire de bras oscillants (40, 42 ; 44, 46) entre en prise sur les deux côtés du pont (12).

6. Dispositif de changement de vitesse selon la revendication 5, **caractérisé en ce que** les deux paires de bras oscillants (40, 42 ; 44, 46) sont disposées symétriquement par rapport au point de fixation du levier, et **en ce que** les axes d'articulation (48, 50, 52, 54) correspondants des deux paires de bras oscillants (40, 42 ; 44, 46) sont alignés les uns aux autres.

7. Dispositif de changement de vitesse selon la revendication 1, **caractérisé en ce qu'**il est prévu plusieurs leviers de transmission (22, 24, 26, 28), qui sont aptes à pivoter autour d'un axe de pivotement (38) solidaire du carter et qui comportent chacun au moins une partie de contact (60) avec respectivement au moins une surface de contact (62), **en ce que** le levier de changement de vitesse (10) ou le support (12) porte au moins un élément de pression (66, 68) qui est situé en regard d'au moins une surface de contact (62) d'un levier de transmission (22, 24, 26, 28) à sélectionner au moyen d'un mouvement longitudinal du levier de changement de vitesse (10) et qui, au moment d'un mouvement transversal du levier de changement de vitesse (10), pousse sur la surface de contact (62) pour faire pivoter le levier de transmission (22, 24, 26, 28) sélectionné.

8. Dispositif de changement de vitesse selon la revendication 7, **caractérisé en ce que** plusieurs leviers de transmission (22, 24, 26, 28) sont disposés entre deux plaques structurelles (30, 32, 34, 36) et **en ce que** le levier pivotant des leviers de transmission (22, 24, 26, 28) coïncide avec l'axe transversal (38) des plaques structurelles (14, 16).

9. Dispositif de changement de vitesse selon la revendication 7 ou 8, **caractérisé en ce que** la partie de contact (60) comporte deux surfaces de contact (62) face à face, qui coopèrent chacune avec un élément de pression (66, 68) associé.

10. Dispositif de changement de vitesse selon l'une quelconque des revendications 7 à 9, **caractérisé en ce que** le levier de transmission (22, 24, 26, 28) comporte une deuxième branche (70), qui peut être amenée en liaison avec un dispositif destiné à changer les rapports de vitesse de la boîte de vitesses du véhicule.

11. Dispositif de changement de vitesse selon l'une quelconque des revendications 1 à 10, **caractérisé en ce qu'**au moins un écarteur (30, 32, 34, 36), solidaire du carter, est disposé entre respectivement deux leviers de transmission (22, 24, 26, 28) adjacents.

12. Dispositif de changement de vitesse selon l'une quelconque des revendications 1 à 11, **caractérisé en ce que** le dispositif de changement de vitesse est regroupé avec le levier de changement de vitesse (10), le support (12), la console (14, 16, 18, 20) et les éléments de transmission (22, 24, 26, 28) pour former un module pré-assemblé.
